# EUROPEAN PATENT APPLICATION

(11) **EP 4 838 439 A1**
(43) Date of publication of application: **11.11.2026**
(21) Application number: 25174992.5
(22) Date of filing: 08.05.2025
(51) Int. Cl.: G06Q 10/20, B60C 25/05, G06Q 50/04

(54) **A DAMAGE MANAGEMENT SYSTEM AND METHOD THEREOF**

(71) Applicant: We Link You ApS, 9530 Støvring (DK)
(72) Inventor: Christensen, Henrik Bro, 9530 Støvring (DK)
(74) Representative: Patrade A/S

(57) **Abstract**

A wheel damage management system (300), for monitoring and repairing a state of repair of a wheel (50) of a vehicle comprises: one or more wheel inspection apparatuses (370a, 370b), one or more wheel repair apparatuses (350a, 350b), and a processor (320), the processor (320) being in communication with the one or more wheel inspection apparatuses (370a, 370b) and the one or more wheel repair apparatuses (350a, 350b).

## Description

### Field of the Invention

The present invention relates to methods and systems for damage management of an object. In particular, the invention relates to a system and a method for the management of damage(s) on a vehicle wheel.

### Background of the Invention

Over time, a wheel of a vehicle will be subject to various forms of damages. These can include damages caused by collisions, typically with another vehicle or an object, but also ordinary wear and tear. In particular, electric vehicles are often subject to rapid wear and tear of their wheels, in particular of the rims of the wheels.

Wheels typically get repaired by car repair centres. However, it can be difficult to keep an accurate track of all the inspections and repairs made on a wheel, as these are typically carried out by different, independent car repair centres, over a span of years. The car owner may therefore forget about past inspections and/or repairs. They may also spend a long time trying to find evidence of past inspections and/or repairs.

Nevertheless, an accurate record of the state of a wheel installed on a car is often necessary for, amongst other things, ensuring that the car can travel safely, to prevent further and more severe damage to the wheel, for compliance with local regulations, and for insurance policies.

There is therefore a need for a solution to alleviate said problem.

### Object of the Invention

One objective of the present disclosure is to achieve a method and system for effectively and promptly monitoring the state of repair of a wheel of a vehicle.

### Summary

According to one aspect of the invention, there is provided a computer-implemented method for monitoring a state of repair of a wheel of a vehicle, the method comprising the following steps: receiving, at a processor, structural data of the wheel; locating, at the processor, a structural defect of the wheel, based on an analysis of the structural data; deriving, at the processor, a parameter of the structural defect, the parameter being based on at least a portion of the structural data; determining, at the processor, based on the parameter of the structural defect, whether a repair process of the structural defect needs to be implemented by a wheel repair apparatus; associating, at the processor, a repair status value with a digital identifier of the wheel, the repair status value comprising an indication of the state of repair of the wheel, wherein the state of repair of the wheel is based on an outcome of the determining step.

In this way, a solution for effectively monitoring a state of repair of a wheel of a vehicle is provided. This method further provides a solution for determining and/or updating a state of repair of a wheel. In this way, any damage that has occurred to the wheel, either by wear and tear or through collisions or other types of incidents can be effectively and promptly monitored. The invention further provides a solution for efficiently and accurately evaluating whether a repair should be implemented, and to then control the implementation of said repair whenever applicable.

The method steps above are computer-implemented steps carried out by a processor, which may determine whether a repair of a located structural defect on the wheel is needed to be carried out by a wheel repair apparatus. Advantageously, the method steps above provide a solution where the processor can communicate with a wheel repair apparatus, so that an evaluation of the state of repair of a wheel can be implemented, and action can be taken when a repair is deemed necessary or recommended. Furthermore, action can be taken when a repair of a damaged wheel is not possible, due to, for example, the severity of the damage.

The state of repair of a wheel may be defined as the state of the wheel in terms of a condition of its structure (e.g., whether it is structurally sound or not), and/or in terms of any damage that is present on the wheel, and the severity and/or extend of said damage.

The processor executes steps to process whether a repair is necessary based on received structural data of the wheel. The decision on whether to implement a repair process (or repair) follows from an analysis of structural data of the wheel. The structural data may be received, at the processor, from the wheel apparatus or by another apparatus, such as an inspection apparatus. Advantageously, the processor uses the structural data to locate, if present, a structural defect of the wheel (e.g., a scratch, a dent, paint damage, an asymmetry in a width of the rim of the wheel, rim warping or the like). In this way, the processor can locate one or more structural defects of the wheel which may potentially need to be repaired. Advantageously, the processor can locate structural defects of the wheel which may render the car unsafe to be driven. The structural data may indicate the severity and/or extent of the damage. The structural data may indicate a type of damage (e.g., a scratch, a dent, warping or the like). In some examples, the structural data may be used to locate more than one defect. The structural data may comprise a plurality of different sub-data, wherein each sub-data is of a specific data type. For example, the structural data may comprise a first sub-data which comprises an image of the wheel, and a second sub-data which comprises a Fourier transform of the image. In some examples, the structural data may comprise different images of different sides of the wheel, which may be used to locate defects in different areas of the wheel.

The processor determines whether the located structural defect needs to be repaired, based on a parameter of the structural defect, the parameter being derived, by the processor, from at least a portion of the structural data. In this way, the processor can assess, on a case-by-case basis, if a structural defect needs to be repaired or not. The parameter may indicate a degree of severity of the damage associated with the structural defect. This means that, if the parameter indicates that the damage is not severe enough for a repair, the process may determine that a repair process is not needed. Similarly, the parameter may indicate that the damage is too extensive to be effectively repaired by the wheel repair apparatus. Either way, superfluous repairs can be avoided.

The processor may associate a repair status value with a digital identifier of the wheel, the repair status value comprising an indication of the state of repair of the wheel, where the state of repair of the wheel is based on an outcome of the determining step previously described. The digital identifier of the wheel is an identifier that uniquely identifies the wheel it is associated with. The digital identifier may indicate a state of repair of the wheel and may be updated after the processor has identified potential damages to the wheel and/or after repairs have been conducted.

A state of repair may be defined as a condition of the wheel, which may be indicative of one or more damages to the wheel and potentially of the severity of said damage. The state of repair may further include an indication of whether a damage can be repaired and/or if a damage has been repaired. Therefore, the repair status value can be used to easily store and access said information. Furthermore, by associating the repair status value with a unique digital identifier, the claimed invention provides an easy and convenient way of monitoring a specific wheel throughout the whole life cycle of said wheel.

The digital identifier may further indicate if a damage has been located on the wheel, when said damage has been determined to be beyond repair. In this way, a reliable record of the state of repair of the wheel is created. The state of repair is associated with the digital identifier of the wheel, so that this can be accessed for inspection later on. This avoids the risk of losing track of inspections and/or repairs conducted by a wheel repair apparatus. This can also be used by a wheel inspection apparatus, which is configured to inspect the wheel. The repair status value may be associated with the digital identifier by being sent to a cloud storage system, together with the digital identifier. The repair status value may be associated with the digital identifier of the wheel by being assigned to the digital identifier. For example, the repair status value may be assigned to the digital identifier by being incorporated in the digital identifier. For example, the repair status value may be an alphanumeric code which is incorporated in an alphanumeric code of the digital identifier.

In some embodiments, the structural data comprises an image of the wheel. In some examples, the analysis of the structural data may be an image analysis of the image. In this way, information on the state of a surface of the wheel may be obtained. For example, the image may provide information regarding the presence of one or more defects such as scratches, paint damages or the like on the rim of the wheel, or on any other part of the wheel the image is taken of. Topographic information about a surface of the wheel can be useful to determine if a collision or other accident has occurred. In some examples, the image of the wheel may indicate if the rim or any other part of the wheel has been eroded in one or more points.

Any standard imaging technique known in the art may be used. In some embodiments, the image of the wheel may be obtained through laser imaging techniques. For example, the image of the wheel may be obtained through laser scanning for image reconstruction. Any laser imaging technique known in the art, and suitable for imaging of a wheel of a vehicle, may be used.

In some examples, the structural defect is a scratch of a portion of the wheel. In some other examples, the structural defect is a dent on a part of the wheel, such as the rim. In some other examples, the structural defect is a warping of a rim of the wheel. In some examples, the structural defect is an erosion of the rim of the wheel. In some examples, multiple structural defects may be located. Said defects can be of any type amongst the ones listed above, and/or other types of defects that can occur on a wheel.

The parameter of the structural defect may be a depth of the structural defect. For example, if the structural defect is a scratch, the parameter may be a depth of the scratch with respect to a surface of the rim. If the structural defect is a dent, the parameter may be a depth of the dent with respect to a surface of the rim. The depth of the scratch and/or of the rim may indicate how deep the scratch and/or the rim is. An example of depth may be a depth of a scratch or dent located on an outer lip of the wheel rim, where the depth is measured with respect to the undamaged outer lip surface (i.e., a portion of the outer lip surface away from the location of the scratch or dent).

In this way, the processor can analyse the depth of the scratch or dent on the wheel surface and determine whether the scratch or dent needs to be repaired. The depth of the scratch or dent may indicate the severity of the scratch, and thus, whether the scratch is a threat to safety whilst driving the car.

In some embodiments, the processor determines, based on the depth, that the scratch or dent needs repairing by a wheel repair apparatus only when an absolute value of the depth of the scratch or dent is higher than a predetermined minimum threshold depth and lower than a predetermined maximum threshold depth. In this way, if the scratch or dent is sufficiently shallow, the processor will not determine that said scratch or dent will need to be repaired. Equally, in some instances, the scratch or dent may be so deep that repairing it is no longer possible. For example, in some circumstances, the only way to remove a scratch or dent is to remove material from the rim, until the surface of the rim is rendered even. If the depth of the scratch is higher than a certain threshold, the amount of material to be removed from the rim to remove the scratch or dent may be excessive, to the point that the rim is no longer safe. In some examples, the amount of material to be removed is so excessive that, upon removal of said material, the wheel would not be able to correctly accommodate a tyre. Advantageously, this prevents the execution of repairs on wheels that are beyond repair. In this type of circumstances, the repair status value may indicate that the wheel needs to be disposed of and replaced by a new wheel. This information can therefore be accessible through the digital identifier.

In some embodiments, the method further comprises, after the associating step, the step of sending, from the processor, the digital identifier and the associated or assigned repair status value to a database. In this way, the digital identifier can be accessed by third parties from the database. Advantageously, a record of the digital identifiers, and therefore of the repair status values for a particular wheel and for multiple wheels can be maintained and updated regularly. This means that a third party, such as the car owner, an insurance company or a government body such as a motor agency can access the repair status of a wheel of a vehicle from the database. This can be used, for example, to monitor the repairs done in the past on a wheel, and/or to verify that the wheel is in a reasonable state of repair so that it can be used safely in a car or other vehicle.

In some embodiments, the digital identifier of the wheel is received at the processor before the receiving step. Alternatively, the wheel may not have a digital identifier, upon receipt, at the processor, of the structural data of the wheel. In some cases, the digital identifier needs to be created by the processor or other system, before associating a repair status value with the digital identifier of the wheel.

In some embodiments, at the determining step, the processor determines that the repair process of the structural defect needs to be implemented by the wheel repair apparatus. In some examples, the method further comprises the step of sending, from the processor, a repair order message to the wheel repair apparatus. In this way, the processor can communicate with a wheel repair apparatus so that the repair process is conducted on the wheel, when this has been deemed to be necessary by the processor.

In some embodiments, the method further comprises, upon completion of the repair process, the step of receiving, at the processor, a repair confirmation message from the wheel repair apparatus, the repair confirmation message comprising a confirmation that the repair process has been completed.

In some embodiments, the method further comprises the step of associating, at the processor, an updated repair status value with the digital identifier of the wheel, the updated repair status value comprising an indication of the repair process. In this way, the digital identifier can contain an updated repair status value which indicates that a repair process (or simply "repair") has been conducted on the wheel. The updated repair status value can provide information that can be later accessed by third parties regarding the repair process, such as a date of the repair, particulars of the repair and an outcome of the repair. Advantageously, the digital identifier can be updated as many times as it is necessary. For example, the digital identifier can be updated any time a repair process is implemented. In some examples, a digital identifier is updated when a repair process is deemed not necessary by the processor.

In some embodiments, the method further comprises the step of associating, at the processor, a carbon footprint value with the digital identifier, wherein the carbon footprint value comprises an indication of the carbon dioxide emissions that have been produced to carry out the repair process. In this way, an indication of the carbon emissions associated with the repair process conducted by the wheel repair apparatus can be accessed by a third party, after the repair, by means of the digital identifier. The carbon footprint may be associated with the digital identifier in similar ways to how the repair status value is associated with the digital identifier.

Alternatively or additionally, the carbon footprint may be associated with the wheel repair apparatus e.g. with a geolocation. The carbon footprint may include different processes associated with the repair process e.g. the carbon footprint of the machining elements, air (re)circulation, painting process etc.

In some embodiments, the structural data is received at the processor from a wheel inspection apparatus, after the wheel inspection apparatus has conducted an inspection of the wheel. In some examples, the wheel inspection apparatus and the wheel repair apparatus are the same apparatus (i.e., a wheel inspection and repair apparatus). In some examples, the wheel inspection apparatus is comprised within a wheel inspection and repair apparatus, which further comprises the wheel repair apparatus.

In some embodiments, the digital identifier is embedded on a barrel of the wheel. In this way, the digital identifier is harder to tamper with. The digital identifier may be embedded into the wheel by the wheel repair apparatus.

According to another aspect of the invention, there is provided a computer-implemented method for repairing a wheel of a vehicle, the method comprising the following steps: transmit, at a wheel repair apparatus, structural data of a wheel to a processor; receive, at the wheel repair apparatus, a repair order message from the processor, the repair order message comprising a command for the wheel repair apparatus to execute a repair process of a structural defect of the wheel, wherein the repair order message has been generated by the processor upon determination, at the processor, that the structural defect needs to be repaired, said determination being based on the derivation, at the processor, of a parameter of the structural defect, the parameter being based on at least a portion of a structural data, the structural data being analysed by the processor so to locate, at the processor, the structural defect; implement, at the wheel repair apparatus, the repair process; after completion of the repair process, transmit, from the wheel repair apparatus, a repair confirmation message to the processor, the repair confirmation message comprising a confirmation that the repair has been completed. In this way, a repair process can be carried out effectively by a wheel repair apparatus. The wheel repair apparatus is in communication with the processor, so that the wheel can be inspected and repaired when needed. The wheel repair apparatus can then update the processor with the confirmation that a repair has been conducted. In some examples, the repair may not be successful. In these cases, the wheel repair apparatus may indicate that the repair process has not been completed successfully within the repair confirmation message.

In some embodiments, the method described in the paragraph above may further provide steps similar to the steps described with regards to the first method described in the summary section of this application.

According to another aspect of the invention, there is provided a wheel damage management system, for monitoring and repairing a state of repair of a wheel of a vehicle, the system comprising: one or more wheel inspection apparatuses, one or more wheel repair apparatuses, and a processor, the processor being in communication with the one or more wheel inspection apparatuses and with the one or more wheel repair apparatuses, wherein the processor is configured to: receive, from one of the one or more wheel repair apparatuses, structural data of a wheel; locate a structural defect on the wheel, based on an analysis of the structural data; derive a parameter of the structural defect, the parameter being based on at least a portion of the structural data of the wheel; determine, based on the parameter of the structural defect, whether the structural defect needs to be repaired by one or more of the wheel repair apparatuses.

The processor may furthermore be configured toassociate a repair status value with a digital identifier of the wheel, the repair status value comprising an indication of the state of repair of the wheel, wherein the state of repair of the wheel is based on an outcome of the determining step.

According to some embodiments, the processor is further configured to: determine that the structural defect needs to be repaired; select a selected wheel repair apparatus of the one or more wheel repair apparatuses to implement the repair process; transmit, to the selected wheel repair apparatus, a repair order message, the repair order message comprising a command for the wheel repair apparatus to repair the structural defect; receive, from the wheel monitoring system, a wheel repair update message, the wheel repair update message comprising a confirmation that the structural defect has been repaired, the wheel repair update message being generated at the selected wheel repair apparatus upon completion of a repair process on the structural defect of the wheel performed by the selected wheel repair apparatus.

The processor may furthermore be configured to associate an updated status value with the digital identifier of the wheel, the updated status value comprising an indication of an updated state of repair of the wheel.

According to another aspect of the invention, there is provided a non-transitory computer-readable medium storing instructions that are operable, when executed by a data processing apparatus of a wheel damage management system according to the embodiments described above, to perform any of the method steps as set forth in this application.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
**Figure 1** is a schematic overview of an embodiment wheel damage management system, the system comprising a wheel repair apparatus, a processor and a database.
**Figure 2** is a schematic overview of a second embodiment of wheel damage management system, the system comprising a wheel repair apparatus, a wheel inspection apparatus, a processor, and a database.
**Figure 3** is a schematic overview of a third embodiment of wheel damage management system, the system comprising two wheel repair apparatuses, two wheel inspection apparatuses, a processor, and a database.
**Figure 4** is a schematic overview of a fourth embodiment of wheel damage management system, the system comprising a multi-purpose booth for various repairs and paint treatments on a wheel, the booth being in communication with a processor and a database. The multi-purpose booth comprises a wheel repair apparatus, an air recirculation device, a filter device, a sensor, and a communication module, with the communication module being connected to the processor.
**Figure 5** is a flow diagram of a computer-implemented method for monitoring a state of repair of a wheel of a vehicle, the method steps being conducted at a wheel damage management system comprising a wheel repair apparatus and a processor.
**Figure 6** is a schematic overview of a repair process to repair a scratch on a wheel, wherein said repair process may be conducted at the wheel repair apparatus of Figure 5.
**Figure 7** is a message flow diagram illustrating a computer-implemented method for inspecting a scratch on a wheel, determining, at a processor, that said scratch should be repaired, and, upon completion of said repair, generate a report including an updated identifier for the wheel, the identifier including information regarding the repair.
**Figure 8** is a message flow diagram illustrating a computer-implemented method for inspecting a scratch on a wheel, determining, at a processor, that said scratch cannot be repaired and generate a report to indicate said outcome. The report will then be sent to a database, so that it can be accessed by a third party, like an insurance company.

### Detailed Description of the Invention

Exemplary embodiments will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected", or "communicatively connected" to the other element with one or more intervening elements interposed there between.

The terminology used herein is for the purpose of describing particular examples only and is not intended to be limiting. As used herein, the terms "comprises", "comprising", "includes", and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

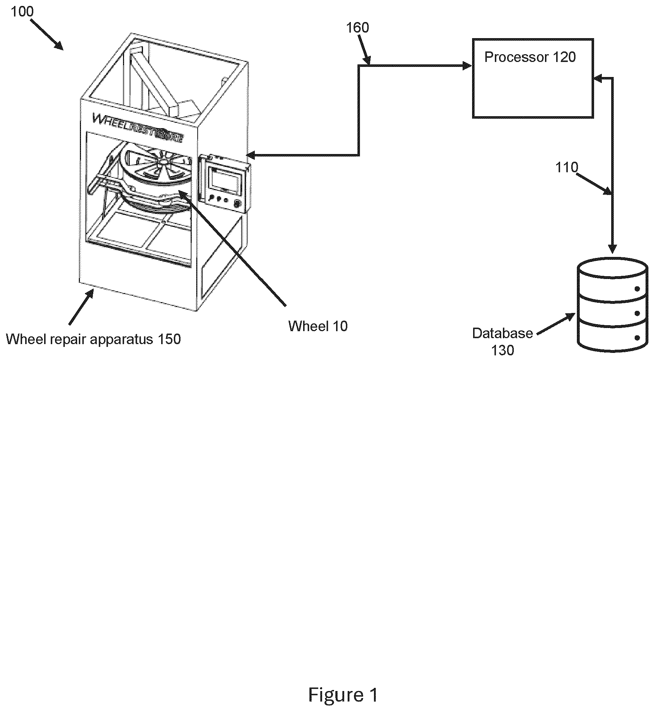

With reference to **Figures 1****,** **2****, and** **3****,** three examples of wheel damage management systems are illustrated.

**Figure 1** illustrates a wheel damage management system 100, the system 100 comprising a processor 120, a database 130 and a wheel repair apparatus 150. The wheel repair apparatus 100 is an apparatus configured to carry out one or more repair processes on a wheel 10. The decision on whether a repair should be undertaken by the wheel repair apparatus 100 is made through steps undertaken at the processor 120 (e.g., data analysis of an image of the wheel 10) as will be describe in relation to further figures.

In the example of Figure 1, the wheel 10 is illustrated to be inserted within a holder (not labelled) of the wheel repair apparatus 150. In this example, the wheel 10 is a car wheel, illustrated without a tyre installed.

The processor 120 is in communication with the wheel repair apparatus 150 through a communication channel 160. The communication channel 160 may be a wireless communication channel (e.g., Bluetooth) or a wired communication channel. A corresponding communication protocol (such as a Bluetooth communication protocol) may be used so that the processor 120 and the wheel repair apparatus 150 can exchange messages between each other. The processor 120 may be connected to the wheel repair apparatus 150 through a Wi-Fi network, or through LAN connection. Any communication protocol available in the art can be used to make the processor 120 and the wheel repair apparatus 150 communicate. The processor 130 is configured to communicate with a database 130 through a communication channel 110. The database 130 may be used to store data that is received from the processor 120. The communication channel 110 may be one of the communication channels previously described with reference to communication channel 160.

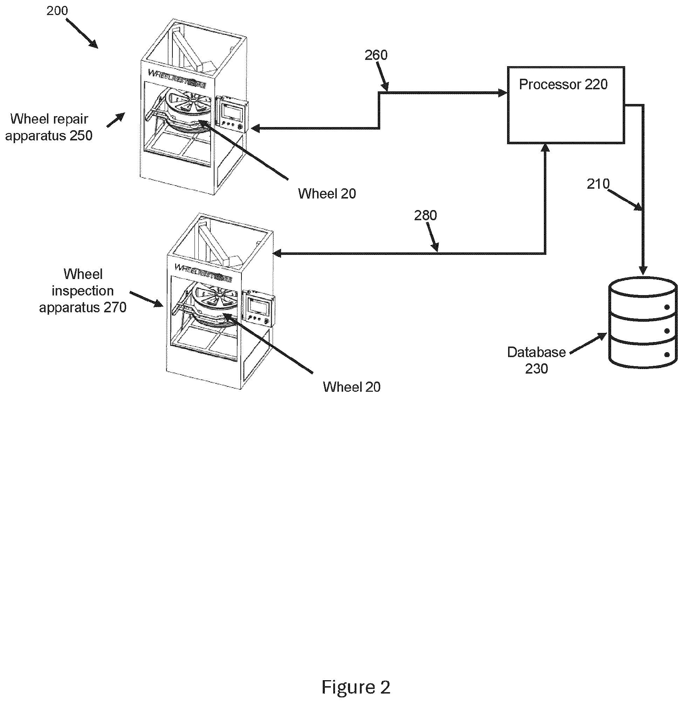

**Figure 2** illustrates an alternative example of wheel damage management system 200, the system 200 comprising a processor 220, a database 230, a wheel repair apparatus 250 and a wheel inspection apparatus. In this case, the system 200 has two separate apparatuses, one for repairing the wheel 20 and one for inspecting the wheel 20. The wheel 20 is, in this case, inspected within the wheel inspection apparatus 270 during an inspection time interval, and is then repaired by the wheel repair apparatus 250 during a repair time interval. The wheel 20 can then be transferred back to the wheel inspection apparatus 270 for a second inspection after a repair process has been conducted in the wheel repair apparatus 250. The processor 220 is configured to communicate with the wheel repair apparatus 250, with the wheel inspection apparatus 270 and with the database through, respectively, communication channels 260, 280 and 210, which are similar to the communication channels 160 and 110 described with regards to Figure 1.

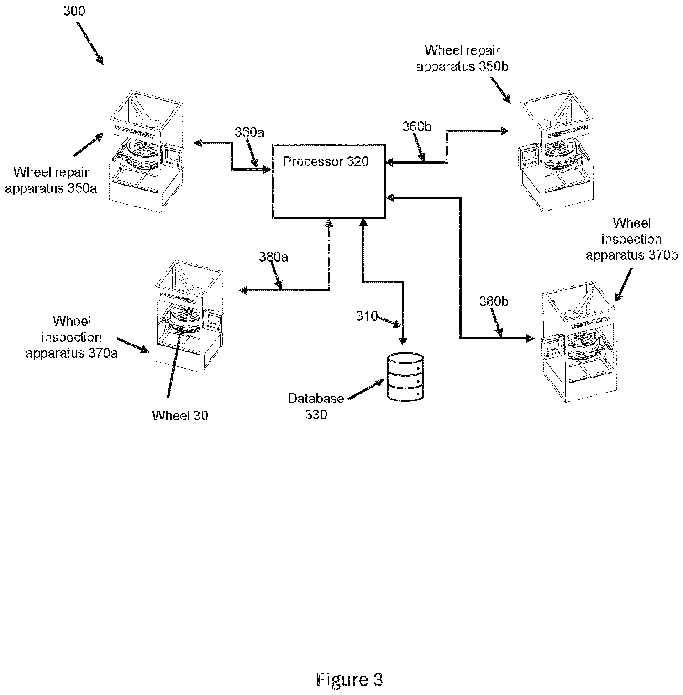

**Figure 3** illustrates a third alternative example of wheel damage management system 300, the system 300 comprising a processor 230, a database 330, two wheel repair apparatuses 350a and 350b, and two wheel inspection apparatuses 370a and 370b. Even in this case, the communication between the processor 320 and any of: the database 330, any of the wheel repair apparatuses 350a, 350b and any of the wheel inspection apparatuses 370a, 370b, occur through respective communication channels (360a, 360b, 380a, 380b, and 310) as the ones described in Figures 1 and 2.

Alternative embodiments of wheel damage management systems, with respect to what is illustrated in Figures 1, 2, and 3, will now be described.

In some examples, a wheel repair apparatus as the one illustrated in Figure 1 may be part of a repair and inspection apparatus, in which a wheel inspection apparatus may be included. In such examples, a wheel can be inspected for damages and repaired by the same apparatus, which can be more efficient and cost effective in some circumstances. For example, in such an arrangement, there is no need for the wheel to be taken out of the wheel inspection apparatus and moved into the wheel repair apparatus. In alternative examples, however, the wheel repair apparatus and the wheel inspection apparatus may be separate. This can sometimes be necessary, if, for instance, the repair equipment for a specific repair process cannot be incorporated in the same apparatus where suitable inspection devices are present. In some cases, keeping the repair and inspection apparatuses separate may be preferable. In some examples, as the one in Figure 3, multiple wheel repair apparatuses and multiple wheel inspection apparatuses can be comprised in a network of repair and inspection apparatuses which are in communication with a processor as processor 320, in a similar way to what is illustrated in Figure 3. In this way, a wheel can be repaired at different wheel repair apparatuses, and inspected at different wheel inspection apparatuses, with one processor coordinating all of the apparatuses' operations. For example, with reference to Figure 3, a wheel may be inspected at wheel inspection apparatus 370a on a first day, repaired at wheel repair apparatus 350a on a second day, inspected again by wheel inspection apparatus 370b on a third day and repaired again at wheel repair apparatus 350b. All of these operations (inspections and repairs) may be controlled and coordinated at the processor 320, which communicates with all of the inspection and repair apparatuses 350a, 350b, 370a, and 370b through the corresponding communication channels 360a, 360b, 380a, and 380b. Regardless of the number of repair and/or inspection apparatuses, the processor 320 may be in communication with a database such as the database 330 of Figure 3.

Other, alternative, embodiments, may comprise a plurality of repair and inspection apparatuses, each of which may be configured to conduct inspections and repairs. In some examples, the wheel repair apparatuses, the wheel inspection apparatuses and/or the wheel inspection and repair apparatuses herein described may be car repair booths. Although in this specific example, the apparatuses have been described as accommodating, inspecting and repairing a car wheel, embodiments where other wheels are accommodated, inspected and repaired are equally possible (e.g., wheels of mopeds, scooters, motorbikes, lorries, or the like).

The wheel repair and inspection apparatuses may be of various kind. The wheel inspection apparatus may be one of different kinds of wheel inspection apparatuses, depending on the type of damage(s) they are configured to inspect. The wheel repair apparatus may be one of various different kinds of wheel repair apparatuses, depending on the type of damage(s) that they are configured to repair and of the type of repair process(es) that they may be configured to carry out. An example of wheel repair apparatus may be a repair booth for repairing scratches and/or dents on the rim of a wheel. Another example can be a rim painting booth, which is configured to paint areas of a rim of a wheel where paint has been scraped. Multiple treatments may be possible within the same wheel repair apparatus.

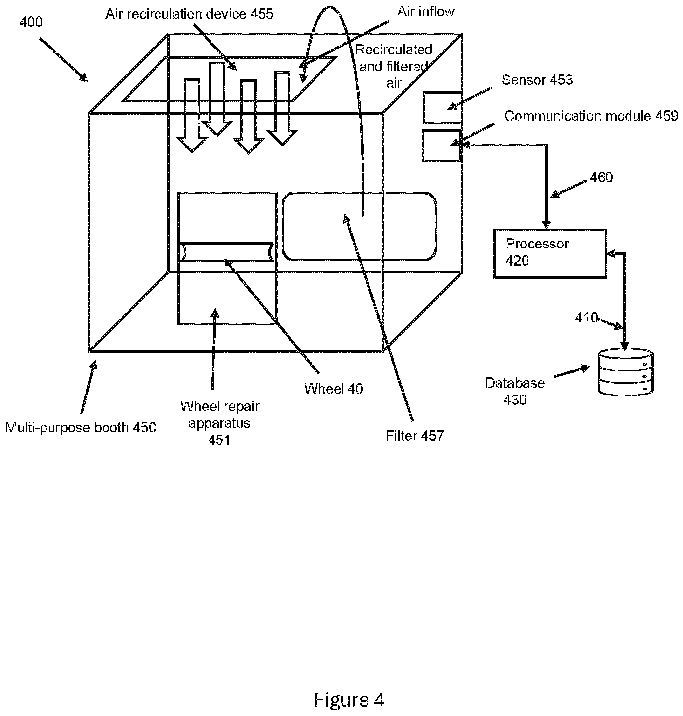

With reference to **Figure 4****,** a further example of wheel damage management system 400 is illustrated.

The system 400 comprises a multi-purpose booth 450. The multi-purpose booth 450 is configured to receive a wheel 40 and can be used to implement various treatments on the wheel 40. In this specific example, the multi-purpose booth 450 comprises a wheel repair apparatus 451, which can be used, for example, to remove scratches and/or dents on a rim of the wheel 40, but can also be used for paint treatment of the wheel and more. One or more technicians meant to conduct the repairs within the wheel repair apparatus may move within the multi-purpose booth 450, which can provide a protected and isolated environment where to conduct repairs. Furthermore, the multi-purpose booth 450 comprises an air recirculation device 455, and an air filter 457. The air recirculation and filter devices 455, 457 are used to maintain the air within the booth 450 clean. Filter 457 may be used to capture and remove particulates created and/or introduced in the air within the multi-purpose booth 450, during treatments conducted at the wheel repair apparatus 451. Examples of particulates may be excess paint particulates, excess metal particulates, dust or the like, produced at and/or emitted from the wheel repair apparatus. The filter may also be used to extract fumes and/or gas and/or vapour from the multi-purpose booth 450, which may be produced at and/or emitted from the wheel repair apparatus 451 during treatments. Once the air has been extracted and cleaned by filter 457, the air is recirculated within the booth 450 through the air recirculation device 455. In this way, the chance that a person (e.g., a mechanic conducting repairs on the wheel 40) inside the multi-purpose booth 450 breathes toxic particulates created during paint treatment and/or repairs is significantly reduced. The multi-purpose booth 450 further comprises a sensor 453. The sensor 453 may have different purposes. For example, it may be used to detect a threshold of excess particulate matter within the booth 450, or may be used to detect when the paint emitter device 455 is emitting paint or not. In this way, the sensor 453 may be used to provide information on a status of the inside of the booth 450 to a person who is located outside the booth 450. The sensor and the data may be for surveillance of any environmental data e.g. for ESG- reporting.

The damage management system 400 further comprises a processor 420 and a database 430. A communication module 459 of the multi-purpose booth 450 is in communication with the processor 420, through a communication channel 460. Moreover, the processor 420 is in communication with a database 430 through a communication channel 410. In this way, repair and/or paint treatment operations conducted within the wheel repair portion 451 can be controlled and/or coordinated at the processor 420. Data related to the repair and treatment operations can further be transmitted, from the multi-purpose booth 450 to the processor 420 and, in some examples, from the processor 420 to the database 430. Data can also be transmitted vice versa, i.e., from the database 430 to the processor 420 and, in some examples, from the processor 420 to the multi-purpose booth 450.

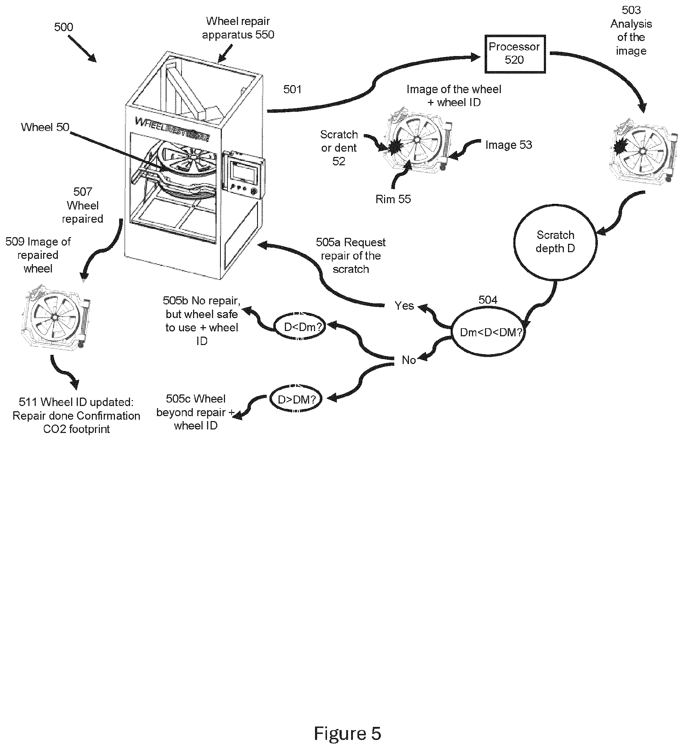

With reference **to** **Figure 5****,** there is illustrated a flow diagram of a computer-implemented method 500 for monitoring a state of repair of a wheel of a vehicle. The method steps may be conducted at a wheel damage management system comprising a wheel repair apparatus and a processor. For example, the method steps may be conducted at a wheel damage management system as illustrated in any of the Figures 1, 2, 3 and 4.

At step 501, the processor 520 receives, from the wheel repair apparatus 550, an image 53 of a wheel 50, the wheel 50 being within the wheel repair apparatus 550. At step 501, the processor further receives a digital identifier ("wheel ID", in Figure 5). The digital identifier of the wheel is an identifier, such as a bar code, an alphanumeric code, a QR code or the like, which uniquely identifies that specific wheel 50. The digital identifier may be used to identify the wheel and keep track of any inspection and/or repair made on the wheel. The image 53 is a type of structural data of the wheel 50. The image 53 may be an image obtained through laser scanning techniques, or any other suitable technique available in the field of imaging. The processor 520 then conducts an analysis 503 of the image 53. The analysis of the image may be conducted with the purpose of identifying damages on the wheel. For example, the analysis 503 may be conducted to identify scratches and/or dents on the surface of the wheel but also paint defects on the surface of the wheel. During the analysis 503, the processor 520 locates a scratch 52 on the rim 55 of the wheel 50. The scratch 52 is a structural defect of the wheel 50, which may need to be removed. For example, the scratch 52 may pose a hazard to the driver and passengers of the vehicle where the wheel is installed. Therefore, the processor 520 derives a depth D of the scratch 52, based at least on a portion of the image. The depth of the scratch 52 may be derived by a portion of the image in which the scratch is located. The depth D may be calculated in different ways. For example, the depth may be an average depth of the scratch, calculated over the whole area of the scratch, or may be a maximum depth of the scratch, over the whole area of the scratch.

The depth D of the scratch is then compared to two predetermined threshold values, at step 504. In this example, the processor 520 determines whether an absolute value of D is lower than a predetermined maximum threshold depth D_{M}. For example, a predetermined maximum threshold depth D_{M} may be previously calculated as the maximum thickness of the wheel of the rim which can be safely removed.

The processor 520 determines 504 whether the depth D is higher than a predetermined minimum threshold depth Dₘ. For example, a predetermined minimum threshold depth Dₘ may be previously calculated as the minimum depth that a scratch needs to have in order to be eligible for repair. This may be useful if, for example, the wheel repair apparatus 550 can operate within a limited tolerance. If the scratch 52 is too shallow, the tolerance of the wheel repair apparatus 550 may be higher than the depth D of the scratch 52, and the scratch 52 may therefore not be repairable. After calculating the depth D, and after determining 504 a comparison between the depth D and both the predetermined maximum threshold depth D_{M} and the predetermined minimum threshold depth Dₘ, the processor 520 will proceed to one of the three steps 505a, 505b and 505c.

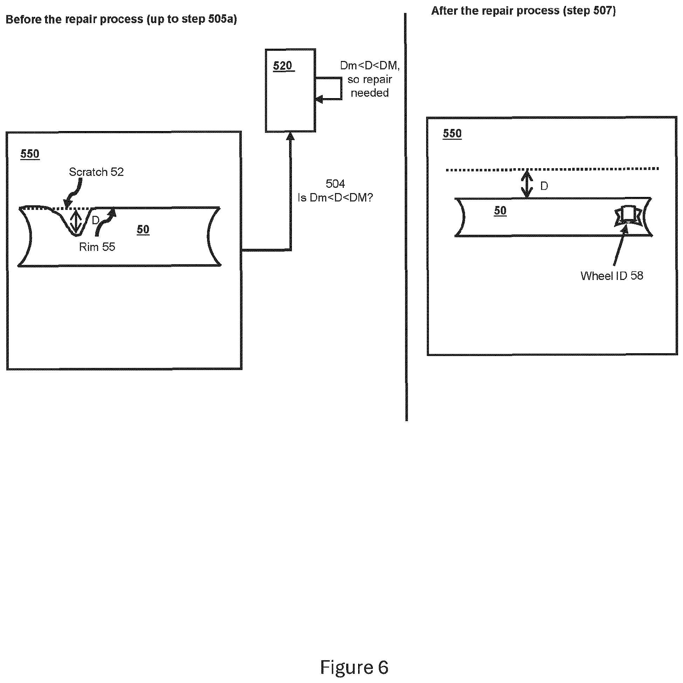

If, at step 504, the processor 520 has determined that the absolute value of D is between the two thresholds D_{M} and Dₘ, then, the processor 520 will determine, at step 505a, that a repair process of the scratch 52 needs to be implemented by the wheel repair apparatus 550. An example of repair process is illustrated in Figure 6, which will be described in greater detail later on. After step 505a, the processor instructs the wheel repair apparatus 550 that the repair process needs to be implemented.

Upon receipt of instructions to implement the repair process from the processor 520, the wheel repair apparatus 550 will implement the repair process, an example of which will be described in Figure 6, to remove the scratch 52 from the rim 53 of the wheel 50.

Once the repair process is successfully completed, the wheel repair apparatus 550 acquires 509 another image of the repaired wheel 50. In this way, evidence of the repair can be used for future checks, and/or for record-keeping.

The processor 520 may then associate, at step 511, a repair status value with the digital identifier ("wheel ID") of the wheel 50. The wheel ID with the associated repair status value may therefore be referred to as an "updated wheel ID".

The repair status value may comprise an indication of the state of repair of the wheel 50, wherein the state of repair of the wheel is based on an outcome of step 504. For example, an outcome of step 504 may be that a repair was determined to be needed. The repair status value may generally be based on an outcome of a determining step, in which the processor 550 determines whether the scratch needs to be repaired or not. In some examples, the repair status value may comprise an indication that a repair process has been conducted at the wheel repair apparatus (or any other apparatus as previously described). In some examples, the repair status value may be updated twice: the first time, when the repair is decided to be necessary, and the second time after the repair process has been completed. Alternatively, the repair status value may only be updated once, when the repair process has been completed. At step 511, the processor may further associate a carbon footprint with the digital identifier of the wheel 50, wherein the carbon footprint comprises an indication of the carbon dioxide emissions that have been produced during the repair of the scratch 52.

The repair status value may be associated with the wheel ID by being assigned to the wheel ID. In other words, the repair status value may be embedded within the "updated wheel ID". If, for example, the updated wheel ID is a QR code on the barrel of the wheel 50, by scanning said code, it may be possible to access the repair status value. In other examples, the repair status value is associated with the wheel ID by sending the repair status value to a cloud storage or similar memory storage unit, where the repair status value is stored. In these examples, the repair status value is associated with the corresponding wheel ID, so that by using the wheel ID it is possible to retrieve the repair status value. These steps can be repeated for multiple inspections and/or repairs. In this way, third parties can access the history of inspections and/or repairs of the wheel 50, by accessing stored repair status values by means of the digital identifier of the wheel 50. The stored repair status values may form a logbook for all the inspections and/or repairs implemented on the wheel.

Going back to step 504, if the depth of the scratch 52 is determined to be lower than a predetermined minimum threshold depth Dₘ, the processor 520 will determine, at step 505b, that no repair process will be conducted. This decision may be based on several factors. For example, the processor 520 may determine that the scratch 52 is too shallow for the wheel repair apparatus to be able to repair the scratch 52. In some cases, the processor 520 may determine that the scratch 52 is too shallow to represent a hazard and is therefore not necessary to repair said scratch 52. The processor 520 may therefore instruct the wheel repair apparatus 550 that no repair process will be implemented on the wheel 50. The processor then associates a repair status value with the wheel ID. In this case, the repair status value is based on an outcome of the determining step 504, the outcome being that the repair is either not needed or possible, but that in either case the wheel is safe for use.

Finally, there is a third possible case. Going back once more to step 504, if the depth of the scratch 52 is determined to be higher than a predetermined maximum threshold depth D_{M}, the processor 520 will determine that the scratch 52 is too deep to be repaired. In some examples, the processor 520 will determine that the depth of the scratch is so high that by removing the scratch 52 the wheel 50 will inevitably be unsafe to use in a car or other vehicle. In this case, the processor 520 will associate a repair status value with the digital identifier of the wheel 50, the repair status value being based on an outcome of the determination, at the processor 520, that the wheel 50 cannot be repaired. The repair status value may comprise an indication that the wheel 50 needs to be disposed of.

In alternative embodiments to the one illustrated in Figure 5, any other type of structural data of the wheel 50 may be received at the processor from the wheel repair apparatus. In some examples, the image (or more generally structural data) may be acquired by the wheel repair apparatus. In some examples, the image (or more generally structural data) may be acquired by a wheel inspection apparatus which is different from the wheel repair apparatus (see for example the wheel damage management system of Figure 2). For example, a wheel inspection apparatus may acquire the image of the wheel and then transmit said image to the wheel repair apparatus, and the wheel repair apparatus transmits said image of the wheel to the processor. Although it has been illustrated, in Figure 5, that the analysis 503 of the image is conducted by the processor, in alternative examples the image analysis of the wheel is conducted by the wheel repair apparatus, or by the wheel inspection apparatus, or by a wheel inspection and repair apparatus. In alternative embodiments to the one illustrated in Figure 5, the processor 520 may associate a carbon footprint with the digital identifier of the wheel 50 even when a repair has not been conducted (see steps 505b and 505c). In these examples, the carbon footprint may be an indication of the carbon dioxide emissions that have been produced during the inspection of the wheel. The carbon footprint may further comprise an indication of carbon dioxide emissions associated with any of the computer-implemented steps executed at the processor 520 and/or at the wheel repair apparatus 550.

With reference to **Figure 6****,** there is illustrated a schematic of a possible repair process which may be conducted at a wheel repair apparatus. With reference to Figures 5 and 6, the repair process may comprise the removal of scratch 52 from wheel 50, at the wheel repair apparatus 550.

**Figure 6** illustrates a side view of a cross-section of a wheel 50, within the wheel repair apparatus 550 of Figure 5, before and after the repair has been completed.

Before the repair has been completed, the wheel 50 has a scratch 52 with depth D. The processor 520 analyses the depth D of the scratch 52, and determines, at step 504, that the depth is such that a repair is needed, as already described with respect to Figure 5. In this case, the depth D is found to be the maximum depth of the scratch 52. Figure 6 further shows the same side view of the cross section of the wheel 50, after the repair has been completed. A thickness equal to the depth D of the scratch has been removed from the wheel 50 during the repair process. In this way, the surface of the wheel where the scratch was is now smooth and levelled. As illustrated on the right-hand side of Figure 6, the wheel 50 further comprises a digital identifier 58, the digital identifier including a repair status value, the repair status value indicating that the scratch 52 has been removed by the wheel 50. The repair status value may further indicate the depth D, which corresponds to the thickness of material that has been removed from the wheel 50 in order to remove the scratch 52.

In some examples, every time a repair and/or inspection is conducted on the wheel, a new, corresponding wheel ID is created. For example, if three different repairs are conducted on a wheel 50 in the span of the wheel lifetime, all three repairs may be associated with a corresponding wheel ID. In some examples, a new physical wheel ID is embedded on the barrel of the wheel 50 for each of the repairs. In some examples, both a physical and a digital ID are generated for each repair. In some examples, only a digital ID is generated for each repair.

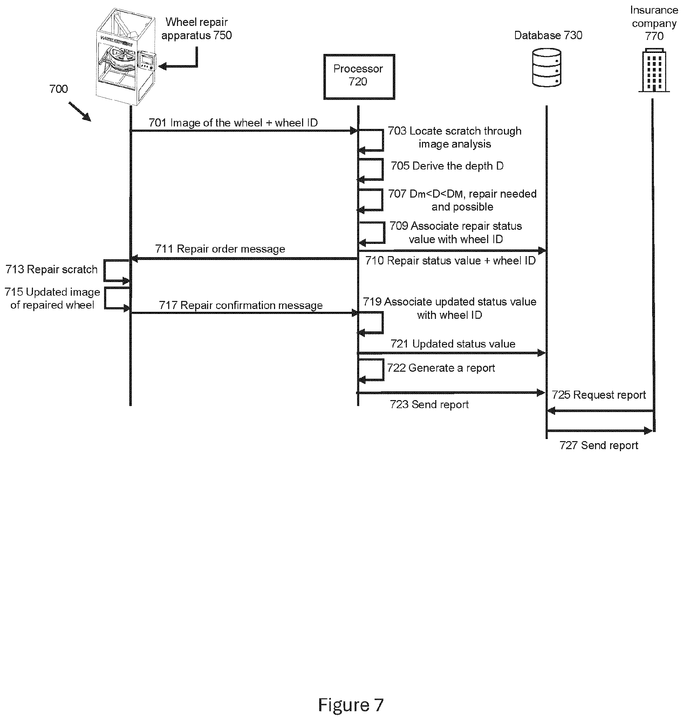

**Figure 7** illustrates a computer-implemented method for monitoring a state of repair of a wheel of a vehicle. Said method is illustrated to be implemented via a processor 720, a wheel repair apparatus 750, a database 730 and an insurance company 770 (or more broadly, a third party 770).

At step 701, the processor 120 receives an image of a wheel and a wheel digital identifier from the wheel repair apparatus 750. The image of the wheel and the wheel digital identifier may be sent within a single message, or via two separate messages from the wheel repair apparatus 750 to the processor 720. The image of the wheel and the wheel digital identifier of the wheel are sent through a communication channel (not labelled).

At step 703, the processor 720 locates a scratch on the wheel (for example, on the rim of the wheel). The location of the scratch occurs upon conduction of an analysis of the image. The analysis is conducted at the processor 720.

At step 705, the processor 720 derives the depth D of the scratch. The depth D of the scratch is based on at least a portion of the image that has been received at the processor 720. For example, the depth D may be calculated by analysing one or more line profiles of the image data of the image. Several methods, amongst image processing techniques known in the art of imaging, may be used to derive the depth D of the scratch.

At step 707, the processor 720 compares the absolute value of the depth D of the scratch with two parameters. The first parameter is a predetermined minimum threshold depth Dₘ, and the second parameter is a predetermined maximum threshold depth D_{M}. More specifically, the predetermined minimum threshold depth Dₘ is a value that indicates a minimum depth that the scratch needs to have, in order to be eligible for repair. This can be a minimum depth that is necessary for the wheel repair apparatus to be able to repair said scratch. In some examples, the predetermined minimum threshold depth is a minimum value of the depth of a scratch, which is necessary for the scratch to be in need of repair. The predetermined maximum threshold depth D_{M}, on the other hand, is a maximum depth that the scratch is allowed to have, in order to be repairable. For instance, if the scratch is too deep, removing said scratch could make the wheel not safe for use. With reference to Figure 6, D_{M} may be determined to be the maximum thickness of the wheel barrel that can be safely removed in order to level the surface of the rim where the scratch is located. For example, by removing too much material, the barrel may be not suitable for safely accommodating a tyre.

In this example, at step 707 the processor 720 determines that the depth of the scratch needs repairing and can be repaired by the wheel apparatus 750.

At step 709, the processor 720 associates a repair status value with the digital identifier of the wheel. The repair status value indicates the state of repair of the wheel, based on an outcome of steps 703, 705, and 707. In other words, the repair status value indicates the state of repair of the wheel after the analysis of the image has been conducted, and after the processor 720 has determined (based on an analysis of the depth D as previously described) that the scratch needs repairing and that the scratch can be repaired. For example, the repair status value may indicate that the wheel needs repairing and that the scratch can be repaired. At step 710, the repair status value and the wheel identifier are transmitted from processor 720 to the database 730. The repair status value and the wheel identifier are associated with one another, so that by using the wheel identifier a third party (e.g., insurance company 770) can easily access the repair status value.

At step 711, the processor 720 sends a repair order message to the wheel repair apparatus 750. The repair order message comprises a prompt to implement a repair process. For example, the prompt may be to implement a repair process at the wheel apparatus 750. Furthermore, the repair order message may further comprise an indication of one or more of the following pieces of information: type of repair, location of the wheel repair apparatus 750, identifier of the wheel apparatus 750 to conduct the repair process in, deadline to implement the repair, the image of the wheel as received by the processor 720 in step 701, digital identifier of the wheel as received in step 701, digital identifier of the wheel as updated with the repair status value at step 709. The repair order message may be generated by the processor 720, before being sent to the wheel repair apparatus 750.

At step 713, the wheel repair apparatus 750 implements the repair process for which the repair order message was sent in the previous step 711.

Upon successful completion of the repair process, at step 715, the wheel repair apparatus acquires a second image of the wheel (here called "updated image"). The updated image may be taken as evidence that the repair process has been successfully completed.

At step 717, the wheel repair apparatus 750 transmits to the processor 720 a repair confirmation message. The repair confirmation message comprises an indication that the repair process has been completed at the wheel repair apparatus.

Upon receipt of the repair confirmation message, at step 719, the processor 720 associates an updated repair status value with the digital identifier of the wheel (i.e., "wheel ID"). The updated repair status value comprises an indication of the repair process. For example, the updated repair status value may comprise an indication that the repair process has been successfully completed. The updated repair status value (or more broadly, the repair confirmation message) may further comprise one or more of the following: date of the repair, an outcome of the repair, a type of repair, an identifier of the wheel repair apparatus 750 which conducted the repair, date of the repair, a recommendation for further inspection(s), or the like. At step 721, the updated status value is transmitted from the processor 720 to the database 730, so that it can be retrieved by a third party later on. Advantageously, being the updated status value associated with the wheel ID, the third party (e.g., the insurance company 770) can access the updated status value by means of the wheel ID. The third party can access both the repair status value and the updated status value, by use of the same wheel ID, after the repair is completed. In some alternative embodiments, steps 710 and 721 are optional.

At step 722, the processor generates a report. The report may comprise a summary with one or more repair processes and one or more inspections that have been conducted with respect to the wheel. The report may include one or more of the following: wheel image as acquired at step 701, outcome of analysis at step 707, digital identifier of the wheel as received by the processor 720 at step 701, repair status value as associated by the processor 720 with the wheel digital identifier at step 709, the repair order message as sent from the processor 720 to the wheel repair apparatus 750, updated image of the repaired wheel as acquired at step 715 by the wheel repair apparatus 750, repair confirmation message as received at the processor 720 at step 717, updated status value as associated by the processor 720 at step 719, and more. Similar information can be included for further repairs and/or inspections as conducted at (other) wheel repair apparatuses and/or at other wheel inspection apparatuses and/or at other wheel inspection and repair apparatuses, on the same wheel.

The report may provide a comprehensive description of repairs and inspections that have been conducted to the wheel. A history of repairs and/or inspections can be defined within the report. At step 721, the report is sent from the processor 720 to a database 730.

At step 725, an insurance company 770 sends a request message to the database 730. The request message comprises a request for the database 730 to send the report to the insurance company 770. The report is extracted from the database and sent from the database 730 to the insurance company through a communication channel, at step 727.

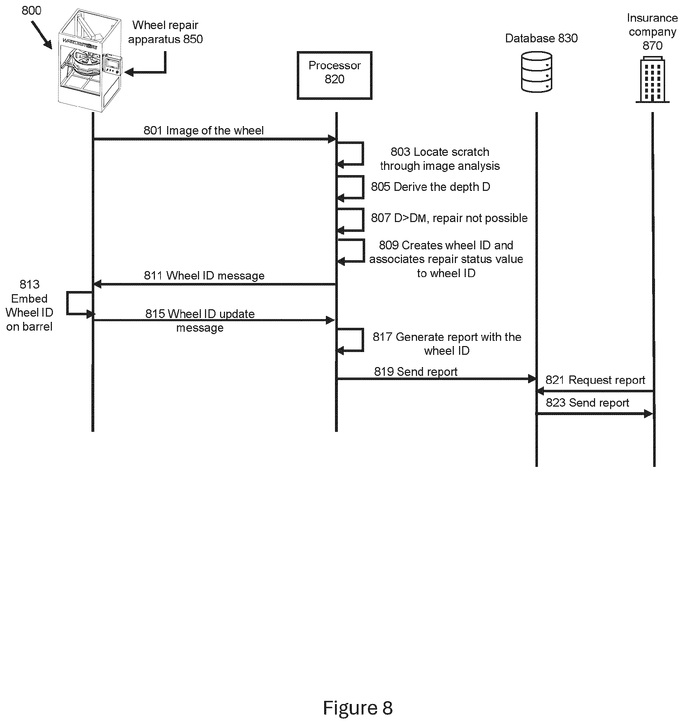

**Figure 8** illustrates a computer-implemented method for monitoring a state of repair of a wheel of a vehicle. In this example, upon inspection of the wheel, the processor 820 locates a scratch that cannot be repaired. Said method is illustrated to be implemented via a processor 820, a wheel repair apparatus 850, and database 830.

Steps 801, 803, and 805 are similar to the steps 701, 703, and 705 which have been described in respect to the method illustrated in Figure 7. The only difference is that, in this example, at step 801 the processor 820 only receives an image of the wheel from the wheel repair apparatus 850 but does not receive a digital identifier of the wheel. This can occur when, for instance, the wheel does not have a digital identifier.

At step 807, the processor 820 determines that the depth of the scratch is too deep to be repaired. More specifically, the absolute value of the depth D is determined to be higher than a predetermined maximum threshold D_{M}. The processor 820 may determine that the wheel needs to be disposed of and not installed back on the car, for safety reasons.

At step 809, the processor 820 creates a digital identifier for the wheel. This identifier is unique to the specific wheel. At step 809, the processor 820 further associates a repair status value with the digital identifier of the wheel. The repair status value comprises an indication of the state of repair of the wheel, after the analysis of the image of the wheel conducted at steps 803 to 807. More specifically, the repair status value is indicative of the fact that the wheel has been deemed unsafe and impossible to repair. The repair status value may comprise a recommendation or an order to dispose of the wheel, and to not install said wheel back on the car. The wheel ID may further be transmitted from the processor 820 to the database 830, together with the associated repair status value, similarly to what has been described with reference to step 710, in Figure 7.

At step 811, the processor 820 sends a wheel identifier message to the wheel repair apparatus 850. The wheel identifier message may comprise instructions for the wheel repair apparatus 850 to embed in the wheel an identifier corresponding to the digital identifier created by the processor 820. For example, the processor 820 may create an alphanumeric code, a QR code, a bar code or the like, in digital form. Said digital code will then be embedded physically in an area of the wheel, so that it can be scanned by, for example, an optical scanning machine, or by a mobile phone, or alternatively can be manually inputted within a website or an app or the like by a user.

At step 813, the wheel repair apparatus 850 embeds a physical wheel identifier on the barrel of the wheel. The physical identifier may be a physical representation of the digital wheel identifier. For example, if the digital identifier is a QR code, the physical identifier embedded on the barrel of the wheel may be a picture of the QR code, that can be scanned by a phone or other scanning device, in order to access the information associated with the digital identifier, such as a status value report.

At step 815, the wheel repair apparatus 850 may transmit to the processor 820 a wheel identifier update message. The wheel identifier update message may contain an indication that the wheel identifier has been embedded onto the barrel of the wheel. In some embodiments, the processor then transmits the digital wheel identifier to the database 830.

At step 817, the processor 820 generates a report. The report may include the wheel digital identifier and the repair status value. The report may comprise information regarding the inspection, conducted at the wheel repair apparatus 850, in which it was determined that the wheel could not be repaired and that the wheel needs to be discarded.

A third party, such as an insurance company, may send a request message comprising a request to access the report at step 821. Upon receipt of the request message, the database 130 transmits the report to the third party, at step 823.

Whilst the examples above, described with respect to Figures 7 and 8, have been illustrated with reference to a damage management system comprising a wheel repair apparatus, a processor and a database, it is noted that similar methods can be implemented through damage management systems as illustrated, for example, in Figures 1, 2 and 3.

For example, in embodiments alternative to the one shown in Figures 7, the image of the wheel may be transmitted from a wheel inspection apparatus to the processor. Then, the repair order message may be transmitted from the processor to a wheel repair apparatus, which may be different from the wheel inspection apparatus. Alternatively, all the messages of steps 701, 711, and 717 are exchanged between a processor and a wheel inspection and repair apparatus.

In some alternative embodiments, the wheel repair apparatus may create the wheel digital identifier. In some examples, a data processing device may be comprised within the wheel repair apparatus and may be used to create a digital identifier of the wheel if, upon inspection, it is determined that the wheel does not have a digital identifier already.

In some embodiments, the wheel inspection apparatus (or the wheel repair apparatus or the wheel inspection and repair apparatus) may comprise an imaging device for acquiring an image of the wheel. For example, the imaging device may be a laser scanning device, which acquires an image of the wheel as a function of a reflectivity map of a laser scanned on the surface of the wheel.

In some embodiments, the wheel inspection apparatus (or the wheel repair apparatus or the wheel inspection and repair apparatus) may comprise a secondary imaging device for imaging and/or detecting the presence of a digital identifier embedded within the wheel. For example, the wheel inspection apparatus may comprise a QR code scanner, or other type of scanner suitable for scanning a corresponding digital identifier.

In some embodiments, the wheel inspection apparatus (or the wheel repair apparatus or the wheel inspection and repair apparatus) may comprise a GPS device, wherein the GPS device is configured to track the geolocation of the apparatus. In some examples, the GPS device generates geolocation data indicating the geolocation of the apparatus. In some examples, the GPS device generates geolocation data that track the geolocation of the apparatus during a period of time. The generation of geolocation data may be continuous. The GPS device may be in communication with the processor. Geolocation data may be sent to the processor, so that the processor can keep track of the geolocation of one or more apparatus. The geolocation data may be transmitted, either directly from the apparatus or from the processor, to a database, such as the database 130 of Figure 1. In some embodiments, the geolocation data may be associated with a repair status value, and/or with a carbon footprint of the corresponding inspection and/o repair at a particular apparatus, so that a third party can retrieve information regarding inspections and/or repairs conducted at different locations.

The imaging device and the secondary imaging device may be separate imaging devices. Alternatively, in some embodiments, the imaging device and the secondary imaging device may be the same imaging device.

Although the embodiments above have all been described with respect to inspection and repair of wheels, it is noted that the methods and systems described herein can be adapted to be used to inspect and repair other components of a vehicle, such as a car bumper, a car door, a car glass, a car mirror, or any other components of a vehicle which may be subject to damages during a collision or through normal wear and tear.

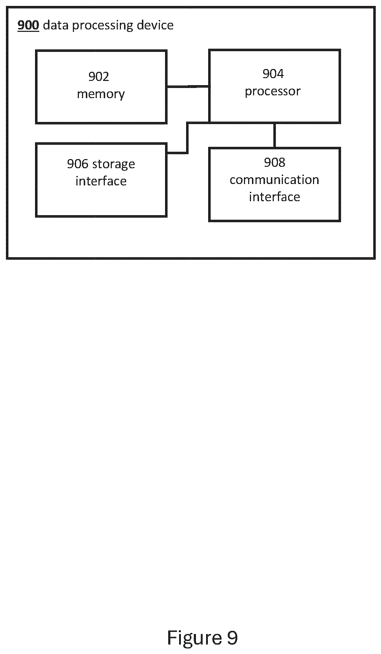

It will be apparent to a person skilled in the art that the methods described herein are all suitable for implementation by a data processing device. By way of example, Fig. 9 shows in schematic form a data processing device 900 that is suitable for performing the functions of any component of the wheel damage management system. The data processing device 900 may also be suitable for performing the functions of any device (or hardware component) comprised within any of the wheel repair apparatus, wheel inspection apparatus, wheel inspection and repair apparatus. The processor of any wheel damage management system may be part of a data processing device as the data processing device 900.

Data processing device 900 includes a processor 904 for executing instructions. Instructions may be stored in a memory 902, for example. Processor 904 may include one or more processing units (e.g., in a multi-core configuration) for executing instructions. The instructions may be executed within a variety of different operating systems on the data processing device 900, such as UNIX, LINUX, Microsoft Windows^{®}, etc. More specifically, the instructions may cause various data manipulations on data stored in memory 902 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 904 is operatively coupled to a communication interface 908, such that the data processing device 900 is capable of communicating with a remote device, such as another data processing device of the wheel damage management system.

Processor 904 may also be operatively coupled to a storage device such as storage medium via storage interface 906. The storage device is any computer-operated hardware suitable for storing and/or retrieving data. In some cases, e.g. a remotely located storage medium, communication interface 908 may perform the function of storage interface 906 such that these two entities are combined.

The storage medium can be integrated in data processing device 900, or it can be external to data processing device 900 and located remotely. For example, data processing device 900 may include one or more hard disk drives as a storage device. Alternatively, where the storage device is external to data processing device 900, it can comprise multiple storage units such as hard disks or solid-state disks in a redundant array of inexpensive disks (RAID) configuration. The storage device may include a storage area network (SAN) and/or a network attached storage (NAS) system.

Processor 904 can be operatively coupled to the storage device via a storage interface 906. Storage interface 906 is any component capable of providing processor 904 with access to the storage device. Storage interface 906 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 904 with access to the storage device.

Memory 902 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

It should be appreciated that those skilled in the art will be able to devise numerous systems and processes which, although not explicitly shown or described herein, embody the principles of the invention, and are thus within the spirit and scope of the present invention.

## Claims

1. A computer-implemented method (700) for monitoring a state of repair of a wheel (50) of a vehicle, the method (700) comprising the following steps:
receiving (701), at a processor (720), structural data (53) of the wheel (50), locating (703), at the processor (720), a structural defect (52) of the wheel (50), based on an analysis (503) of the structural data (53),
deriving (705), at the processor (720), a parameter of the structural defect (52), the parameter being based on at least a portion of the structural data (53),
determining (707), at the processor (720), based on the parameter of the structural defect (52), whether a repair process of the structural defect (52) needs to be implemented by a wheel repair apparatus (750),
associating (709), at the processor (720), a repair status value with a digital identifier of the wheel (50), the repair status value comprising an indication of the state of repair of the wheel (50), wherein the state of repair of the wheel (50) is based on an outcome of the determining step (707).

2. The method (700) of claim 1, wherein the structural data (53) comprise an image of the wheel (50), and wherein the analysis (503) of the structural data is an image analysis of the image.

3. The method (700) of claim 2, wherein the image (53) is obtained through laser imaging techniques.

4. The method (700) of any preceding claim, wherein the structural defect (52) is a scratch or a dent on a rim (55) of the wheel (50), and wherein the parameter of the structural defect (52) is a depth of the scratch or a depth of the dent with respect to a surface of the rim (55).

5. The method (700) of claim 4, wherein the processor (720) determines, based on the depth, that the structural defect (52) needs repairing by the wheel repair apparatus (750) only when an absolute value of the depth is higher than a predetermined minimum threshold depth and lower than a predetermined maximum threshold step.

6. The method (700) of any preceding claim, further comprising, after the associating (709) step:
sending (710), from the processor (720), the digital identifier and the associated repair status value to a database (730).

7. The method (700) of any preceding claim, wherein the digital identifier of the wheel (50) is received, at the processor (720), before the receiving (701) step.

8. The method (700) of any preceding claim, wherein at the determining step (707) the processor (720) determines that the repair process of the structural defect needs to be implemented by the wheel repair apparatus (750), and wherein the method (700) further comprises the following steps:
sending (711), from the processor (720), a repair order message to the wheel repair apparatus (750),
upon completion of the repair process, receiving (717), at the processor (720), a repair confirmation message from the wheel repair apparatus (750), the repair confirmation message comprising a confirmation that the repair process has been completed, and
associating (719), at the processor (720), an updated repair status value with the digital identifier of the wheel (50), the updated repair status value comprising an indication of the repair process.

9. The method (700) of claim 8, further comprising the step of associating, at the processor, a carbon footprint value with the digital identifier, wherein the carbon footprint value comprises an indication of the carbon dioxide emissions that have been produced during the repair of the structural defect.

10. The method (700) of any preceding claim, wherein the structural data is received at the processor (720) from a wheel inspection apparatus (370), after the wheel inspection apparatus (370) has conducted an inspection of the wheel (50).

11. The method (500) of any preceding claim, wherein the digital identifier is embedded on a barrel of the wheel (50).

12. A computer-implemented method (700) for repairing a wheel (50) of a vehicle, the method (700) comprising the following steps:
transmit (701), at a wheel repair apparatus (750), structural data of a wheel (50) to a processor (720),
receive (711), at the wheel repair apparatus (750), a repair order message from the processor (720), the repair order message comprising a command for the wheel repair apparatus (750) to execute a repair process of a structural defect (52) of the wheel (50), wherein the repair order message has been generated by the processor (720) upon determination, at the processor (720), that the structural defect (52) needs to be repaired, said determination being based on the derivation (705), at the processor (720), of a parameter of the structural defect (52), the parameter being based on at least a portion of the structural data (52), the structural data (52) being analysed (503) by the processor (720) so to locate (703), at the processor (720), the structural defect (52),
implement (713), at the wheel repair apparatus (750), the repair process, after completion of the repair process, transmit (717), from the wheel repair apparatus (750), a repair confirmation message to the processor (720), the repair confirmation message comprising a confirmation that the repair has been completed.

13. A wheel damage management system (300), for monitoring and repairing a state of repair of a wheel (50) of a vehicle, the system (300) comprising:
one or more wheel inspection apparatuses (370a, 370b),
one or more wheel repair apparatuses (350a, 350b), and
a processor (320), the processor (320) being in communication with the one or more wheel inspection apparatuses (370a, 370b) and the one or more wheel repair apparatuses (350a, 350b),
wherein the processor (320) is configured to:
receive, from one of the one or more wheel inspection apparatuses (370a, 370b), structural data of a wheel (50),
locate (703) a structural defect on the wheel (50), based on an analysis (503) of the structural data (53),
derive (705) a parameter of the structural defect (52), the parameter being based on at least a portion of the structural data (53) of the wheel (50),
determine (707), based on the parameter of the structural defect (52), whether the structural defect (52) needs to be repaired by one or more of the wheel repair apparatuses (350a, 350b), and
associate (709) a repair status value with a digital identifier of the wheel (50), the repair status value comprising an indication of the state of repair of the wheel (50), wherein the state of repair of the wheel (50) is based on an outcome of the determining step (707).

14. The wheel damage management system (300) of claim 14, wherein the processor (320) is further configured to:
determine (707) that the structural defect needs to be repaired,
select a selected wheel repair apparatus (350a, 350b) of the one or more wheel repair apparatuses (350a, 350b) to implement the repair process, transmit (711), to the selected wheel repair apparatus (350a, 350b), a repair order message, the repair order message comprising a command for the selected wheel repair apparatus (350a, 350b) to repair the structural defect,
receive (717), from the selected wheel repair apparatus (350a, 350b), a wheel repair update message, the wheel repair update message comprising a confirmation that the structural defect has been repaired, the wheel repair update message being generated at the selected wheel repair apparatus (350a, 350b) upon completion of a repair process on the structural defect of the wheel performed by the selected wheel repair apparatus (350a, 350b), and
associate an updated status value with the digital identifier of the wheel (50), the updated status value comprising an indication of an updated state of repair of the wheel (50).

15. A non-transitory computer-readable medium storing instructions that are operable, when executed by a data processing apparatus (900) of a wheel damage management system (300), to perform the steps of method claims 1 to 13.
